# FASCICULE DE BREVET EUROPEEN

(11) **EP 1 496 689 B1**
(45) Date de publication et mention de la délivrance du brevet: **12.03.2008**
(21) Numéro de dépôt: 04291748.4
(22) Date de dépôt: 08.07.2004
(51) Int. Cl.: H04N 5/33, G02B 13/16, G02B 13/14

(54) **Système de vision nocturne à infrarouge générant des images couleur**
Infrarotes Nachtsichtgerät zum Erstellen von Farbbildern
Infrared night vision device for generating coloured images

(30) Priorité: 11.07.2003 FR 0308583
(43) Date de publication de la demande: 12.01.2005
(73) Titulaire: VALEO VISION, 93012 Bobigny Cédex (FR)
(72) Inventeur: Fleury, Benoist, 94300 VINCENNES (FR); Hue, David, 78400 CHATOU (FR); Hidden, Philippe, 92600 ASNIERES (FR)
(74) Mandataire: Renous Chan, Véronique

(56) Documents cités:
- US-A- 5 001 558
- US-A- 5 910 816
- US-A- 6 150 930
- US-A1- 2002 118 282
- US-B1- 6 429 429

## Description

### Domaine de l'invention

L'invention concerne un système de vision nocturne pour véhicule automobile. Ce système de vision nocturne, de type à infrarouge, permet de réaliser des images, au moins en partie en couleur, de la scène de route se déroulant devant le véhicule. L'invention concerne également un procédé de mise en oeuvre de ce système.

L'invention trouve des applications dans le domaine des véhicules circulant sur route comme, par exemple, les véhicules automobiles. Elle trouve, en particulier, des applications dans le domaine de la vision nocturne pour ces véhicules.

### Etat de la technique

Compte tenu du nombre important de véhicules circulant sur les routes, il est nécessaire de procurer, à ces véhicules et à leurs conducteurs, une vision de la route la mieux adaptée possible afin de réduire les risques d'accidents. En particulier la nuit, il est important que le conducteur puisse avoir une vision suffisamment détaillée de la route qui s'étend devant lui ainsi que des bas-côtés de cette route. Autrement dit, pour des questions de sécurité, on cherche à améliorer la vision nocturne de la scène de route par le conducteur du véhicule.

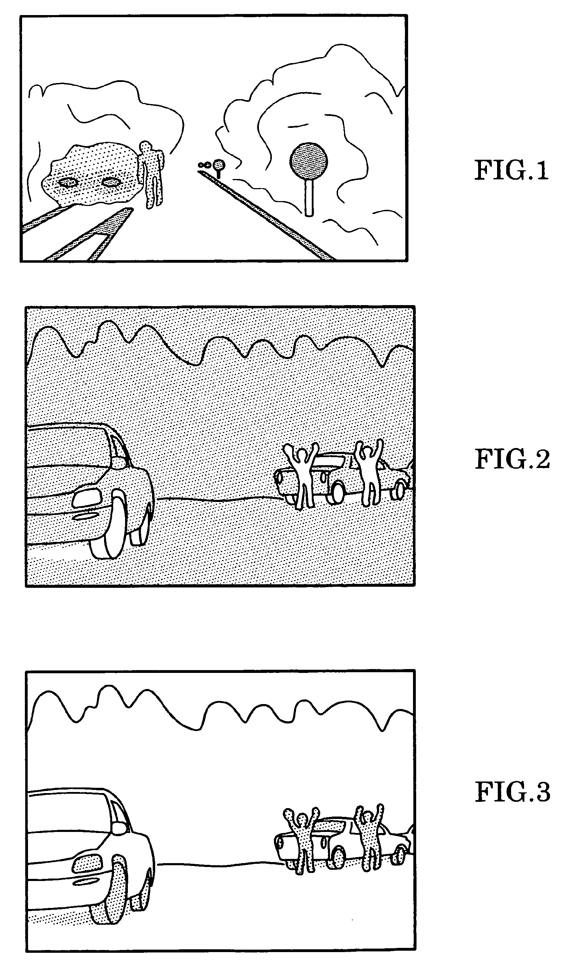

Pour cela, il existe des systèmes de vision nocturne dans lesquels un dispositif d'éclairage, du type projecteur, émet un faisceau lumineux infrarouge en direction de la route, à l'avant du véhicule. Cette lumière infrarouge est réfléchie par les différents objets situés dans la scène de route. Cette réflexion de la lumière infrarouge est plus ou moins intense selon la nature de l'objet et sa distance par rapport au dispositif d'éclairage. Un capteur sensible aux rayonnements infrarouges, situé généralement dans le véhicule, assure une capture de ces rayonnements infrarouges. Il fournit alors une image infrarouge de la scène de route s'étendant devant le véhicule. Un tel système avec émission de rayons infrarouges, réflexion de ces rayons et capture des rayons réfléchis est appelé « système actif ». Il permet de détecter le proche infrarouge, c'est-à-dire les rayonnements ayant une longueur d'onde pouvant atteindre 1100 nm. Un exemple d'image obtenue avec un système actif est montré sur la figure 1. Cette image permet de détecter un véhicule, avec un piéton sur la route à coté du véhicule. Cependant, il n'est pas possible de déterminer si les lumières de ce véhicule sont les feux avant ou les feux stop du véhicule. Il n'est donc pas possible de savoir dans quel sens est placé le véhicule. Cette image permet également de voir des taches claires sur la droite de la route ; ces taches claires semblent être des panneaux de signalisation, mais il est impossible de lire l'information inscrite sur ces panneaux.

Il existe également des systèmes permettant de détecter l'infrarouge lointain. Ces systèmes sont appelés des « systèmes passifs ». Dans ces systèmes, un capteur capture la lumière infrarouge lointaine, c'est-à-dire les rayonnements ayant une longueur d'onde de l'ordre de 10 µm. De tels systèmes permettent de capturer uniquement les rayonnements infrarouges émis par les objets eux-mêmes. En d'autres termes, il s'agit d'une mesure de température des éléments de la scène de route. Dans un tel système passif, le capteur capture la chaleur détectée, comme une lumière infrarouge. Un exemple d'une image obtenue par un système passif est montré sur la figure 2. Cette image permet de visualiser un premier véhicule et, plus loin, un second véhicule avec des piétons à proximité. Cependant, il n'est pas possible de déterminer, sur cette image, si les lumières de ces véhicules sont les feux avant ou les feux stop. Il n'est donc pas possible de savoir dans quel sens sont placés ces véhicules.

Tous ces systèmes présentent des inconvénients. En particulier, les systèmes passifs ne peuvent détecter les objets froids. Cet inconvénient est encore aggravé quand des objets mobiles, partageant le même espace que le véhicule, sont invisibles. C'est le cas notamment des voitures encore froides, qui ne roulent que depuis quelques instants et dont les glaces des feux arrières n'ont pas eu le temps de chauffer. En effet, la grande quantité de rayons infrarouges lointains émis par les lampes des feux arrières ne traversent ni le plastique ni le verre. De même, l'allumage des feux stop, des feux clignotants ou des feux de détresse n'échauffent pas instantanément la glace dudit feu. Ils sont donc indétectables par un système passif.

Au contraire, les systèmes actifs réagissent trop bien aux sources lumineuses telles que les feux arrières des véhicules, les feux tricolores sur la route, etc. Ces feux, en émettant des rayons infrarouges, éblouissent le capteur et créent une sorte de halo de lumière tout autour de l'image de l'objet considéré, ce qui rend le contour de l'objet indéfini. Cet éblouissement est appelé « blooming ».

Par ailleurs, avec ces systèmes actifs ou passifs, la scène de route est vue à des longueurs d'ondes qui sont extérieures au spectre du visible et donc, par nature, étrangères à la notion de couleur. L'image de la scène de route obtenue par ces systèmes est donc monochrome ( c'est-à-dire noir et blanc) avec différents niveaux de gris, les niveaux clairs correspondant aux objets émettant ou réfléchissant des infrarouges et les niveaux sombres correspondant aux objets n'émettant pas ou ne réfléchissant pas d'infrarouge. Or, avec une image monochrome, il est parfois difficile de savoir précisément de quel type d'objet il s'agit. Par exemple, sur les images des figures 1 et 2, il n'est pas possible de détecter s'il s'agit des feux avant ou arrière des véhicules. De même, il n'est possible de lire les informations inscrites sur les panneaux de signalisation.

Des systèmes actifs ou passifs tentent de remédier à ces inconvénients en traitant l'image capturée avant de l'afficher. L'un de ces traitements consiste en une inversion vidéo de l'image. Cette inversion vidéo permet de rendre clairs les objets détectés comme sombres et de rendre sombres les objets détectés comme brillants. Un exemple d'image traitée par inversion vidéo est montrée sur la figure 3. Dans cet exemple, l'inversion vidéo permet de mieux visualiser la scène de route et de mieux imaginer à quoi correspond chaque objet de la scène de route. Dans cet exemple, l'inversion vidéo permet de montrer que le premier véhicule vient en sens inverse et que le second véhicule est stationné dans le même sens que le véhicule dans lequel est monté le système.

Un autre traitement de l'image capturée propose de coloriser artificiellement l'image de la scène de route. Ce traitement consiste à associer, à chaque niveau de gris de l'image capturée, une couleur artificielle et arbitraire. Cette opération est connue, en traitement d'images, sous le nom d' «application d'une LUT (look up table) ». L'image obtenue est appellée « image en fausses couleurs » car les couleurs visibles sur l'image sont des couleurs artificielles qui ne correspondent pas aux couleurs réelles. Par exemple, la couleur rouge peut être associée à un niveau de gris élevé et la couleur bleue à un niveau de gris très faible. Les niveaux de gris intermédiaires sont associées à des couleurs déclinées entre le rouge et le bleu. On comprend ainsi que, par exemple, un feu situé en face du capteur aura une image forcement rouge (niveau de gris élevé). On ne pourra donc pas savoir s'il s'agit d'un feu de croisement d'un véhicule ou d'un feu stop. Il n'est donc pas possible d'interpréter exactement les objets situés dans la scène de route devant le véhicule. En d'autres termes, ces opérations de colorisation peuvent permettre d'améliorer la perception d'une image en révélant des informations qu'un simple affichage monochrome ne permet pas d'identifier. Elles restent, néanmoins, des artifices et ne rendent en rien compte de la couleur réelle des objets. Par exemple, dans le cas de la vision nocturne par infrarouge, des objets de la même couleur visible (par exemple vert) peuvent avoir des comportements radicalement opposés dans l'infrarouge. L'un peut apparaître brillant ou clair parce que, outre les longueurs d'ondes lui donnant sa couleur verte, l'objet réfléchit l'infrarouge proche (système actif) ou émet, du fait de sa température, de l'infrarouge lointain (système passif). L'autre peut apparaitre sombre parce qu'il absorbe l'infrarouge proche et n'émet pas, du fait de sa faible température, d'infrarouge lointain.

Il est également connu du document US 6 150 930 un système de vision de nuit utilisant un capteur au silicium détectant à la fois les rayonnements visibles et infrarouges, permettant d'obtenir des images dont certaines zones sont plus mises en évidence que d'autres.

### Exposé de l'invention

L'invention a justement pour but de remédier aux inconvénients des techniques exposées précédemment. A cette fin, elle propose un système de vision nocturne permettant de réaliser une image infrarouge en couleur de la scène de route située devant le véhicule. Pour cela, l'invention propose d'utiliser un capteur couleur.

L'invention consiste donc en un système de vision nocturne d'une scène de route comportant les caractéristiques de la revendication 1.

Le dispositif émettant la lumière infrarouge peut être, par exemple, choisi parmi une ou plusieurs lampes à incandescence, une ou plusieurs diodes électroluminescentes fonctionnant dans l'infrarouge ou une ou plusieurs diodes laser.

L'invention concerne également un procédé selon la revendication 5 pour mettre en oeuvre le système de vision nocturne de l'invention.

### Brève description des dessins

La figure 1, déjà décrite, représente un exemple d'image de scène de route prise par un système actif classique.
La figure 2, déjà décrite, représente un exemple d'image de scène de route prise par un système passif classique.
La figure 3, déjà décrite, représente un exemple d'image de scène de route prise par un système passif et ayant subie une inversion vidéo.
La figure 4 représente un exemple d'image de scène de route prise par un capteur monochrome très sensible.
La figure 5 représente un exemple d'image de scène de route prise par un capteur couleur peu sensible.
La figure 6 représente un exemple d'une image de scène de route obtenue par composition des images des figures 4 et 5.
La figure 7 représente schématiquement le système de vision nocturne de l'invention.

### Description détaillée de modes de réalisation de l'invention

L'invention concerne un système de vision nocturne en couleur. Ce système comporte un dispositif pour projeter une lumière infrarouge vers la scène de route, à l'avant du véhicule, et au moins un capteur pour capturer l'image de cette scène de route, ce capteur étant un capteur couleur. En d'autres termes, ce premier capteur, qui est placé dans ou sur le véhicule, est un capteur couleur capable de capturer une image en couleur de la scène de route. Cette image est une image en couleurs réelles.

Ce capteur couleur est associé à un second capteur, qui lui est monochrome. De cette façon, le capteur monochrome, qui est un capteur à haute sensibilité infrarouge, capture une image infrarouge de la scène de route. De façon simultanée ou quasi-simultanée, le capteur couleur capture une image en couleur de la scène de route. Ces deux images, en couleur et infrarouge, sont ensuite combinées pour former une seule et même image infrarouge en couleur de la scène de route.

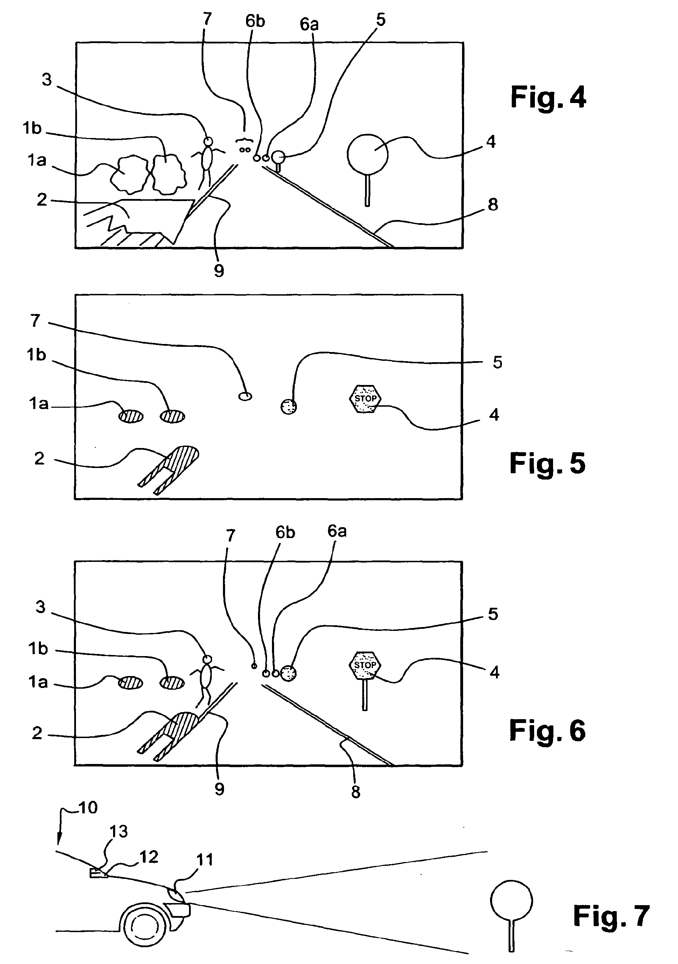

Un exemple du système de l'invention est schématisé sur la figure 7. Cette figure 7 montre un véhicule automobile 10 muni du système de vision nocturne de l'invention. Ce système comporte un dispositif de projection de rayonnements infrarouges 11, ou projecteur. Comme montré sur la figure 7, ce projecteur peut être installé, par exemple, dans un des feux avant du véhicule. Il est possible également d'installer un projecteur dans chaque feu avant du véhicule. Le projecteur peut aussi être installé dans un logement spécial, par exemple, entre les deux feux avant du véhicule.

Le système de l'invention comporte aussi un capteur couleur 12. Ce capteur couleur est combiné avec un capteur monochrome 13. Dans ce cas, les deux capteurs sont connectés ensemble de façon à être synchrones ou quasi-synchrones. Des moyens de traitement d'images, non représentés sur la figure par mesure de simplification, sont reliés aux capteurs pour traiter les images fournies par ces capteurs. Ces moyens de traitement peuvent être de type électroniques, montés par exemple sur un PCB dédié à ce traitement. Ils peuvent aussi être de type informatique, incorporés par exemple dans l'ordinateur de bord du véhicule.

Le capteur monochrome est choisi de façon à avoir une haute sensibilité aux rayons qu'il peut détecter, notamment aux rayonnements infrarouges, notamment dans le proche infrarouge. Ce capteur est monochrome car, d'une façon générale, les capteurs monochromes actuels sont nettement plus sensibles que les capteurs couleurs. Un capteur à haute sensibilité peut capturer le plus d'informations possible, avec un éblouissement maximum toléré. On considère qu'un capteur est très sensible aux infrarouges lorsqu'il est notamment capable de détecter des rayonnements entre 800 et 1200 nm, notamment entre 850 et 1100 nm, par exemple aux alentours des 1000 à 1100 nm.

Pour exprimer plus concrètement ce à quoi correspond une telle sensibilité, on peut donner l'exemple suivant :un capteur à haute sensibilité est capable de détecter un nombre minimum de watts, par exemple équivalent à l'énergie réfléchie par un tronc arbre à 100 ou 200 mètres sur lequel on envoie une intensité d'une ou plusieurs dizaines de watts dans la bande 800-1000 nm. Ainsi, l'image capturée par ce capteur monochrome est très claire et contient le plus d'informations possible mais, par contre, elle subit l'éblouissement des sources adverses,

Au contraire, la sensibilité du capteur couleur n'est pas prépondérante. On peut donc utiliser un capteur couleur ayant une sensibilité inférieure à celle du capteur monochrome, par exemple une sensibilité 10 à 100 fois moins élevée. Un tel capteur couleur, dit peu sensible, peut donc capturer des rayonnements approximativement 10 à 100 fois supérieurs à ce que capte le capteur à haute sensibilité sans blooming. On comprend par « blooming » le fait qu'une image présente une tache qui est saturée et qui est plus grande que celle de l'image de la source sur le capteur. Pour prendre un exemple concret, si on reprend le tronc d'arbre mentionné plus haut, le capteur dit peu sensible ne pourra par exemple le détecter qu'à environ 30 mètres, alors que le capteur dit à haute sensibilité pouvait le faire à 100 mètres, quand on choisit un rapport de sensibilité entre les deux capteurs d'environ 100 (c'est la distance au carré qui intervient).

L'image capturée par le capteur couleur ne doit comporter substantiellement aucun éblouissement. Toutes les sources de lumière intenses doivent être ponctuelles et ne pas comporter substantiellement de halo. On peut ainsi obtenir une image montrant les sources lumineuses réelles, sans fausse information due à l'éblouissement. Ces sources lumineuses réelles sont alors montrées en couleurs. L'image couleur obtenue est essentiellement composée de taches colorées correspondant aux sources lumineuses.

Le système de vision nocturne est basé sur la capture des deux images synchrones ou quasi synchrones d'une même scène de route, avec des paramètres d'exposition sensiblement différents de sorte que :
- l'une des images est aussi claire que le permet le capteur monochrome afin de détecter le plus d'informations possible, et
- l'autre image est beaucoup plus sombre afin que seuls les éléments susceptibles d'éblouir l'image claire soient notablement visibles, et en couleurs.

Un exemple d'image claire, capturée par le capteur monochrome, est représenté sur la figure 4. Cette image montre les différents éléments détectés dans la scène de route par le capteur à haute sensibilité. Parmi ces éléments, on distingue deux halos de lumière 1a et 1b, un troisième halo de lumière projectée au sol 2, un piéton 3, des lignes blanches 8 et 9, des panneaux 4 et 5 et des taches blanches 6a, 6b, 7.

Un exemple d'image sombre, capturée par le capteur couleur, est représenté sur la figure 5. Cette image montre uniquement les éléments qui étaient les plus éblouissant sur la figure 4. Parmi ces éléments, on voit les halos 1a, 1b, 2 et 7 qui sont représentés avec des hachures pour symboliser la couleur jaune et les panneaux 4 et 5 qui sont représentés avec des mouchetés pour symboliser la couleur rouge. En effet, sur une image réelle d'une scène de route correspondant à celle de la figure 1, l'image prise par le capteur couleur montrerait des éléments jaunes et d'autres rouges. On comprendra que toutes les autres couleurs peuvent aussi apparaître sur l'image ; par exemple, si un feu tricolore est présent dans la scène de route, le feu du bas apparaît vert sur l'image et le feu intermédiaire orange.

Cette image sombre de la figure 5 permet, notamment, de faire apparaître l'inscription des panneaux de signalisation. On peut ainsi savoir qu'il s'agit d'un panneau de stop.

L'image claire monochrome et l'image sombre en couleur sont ensuite combinées pour ne former qu'une seule et même image de la scène de route. Ce traitement peut consister en une opération de moyennage des deux images. Autrement dit, on réalise une moyenne entre chaque pixel de l'image couleur et le pixel correspondant de l'image monochrome pour former une image infrarouge en couleur de la scène de route. Cette nouvelle image comporte à la fois les informations relatives aux couleurs fournies par l'image en couleur et à la fois les informations détaillées fournies par l'image monochrome.

La fusion, ou combinaison, de l'image claire monochrome et de l'image sombre en couleur permettent d'obtenir une image très sensible de la scène de route (tout en étant dénuée de tout éblouissement) et dont les sources de lumière et les objets brillants sont colorés.

La figure 6 représente un exemple d'une image de scène de route obtenue par combinaison d'une image monochrome claire avec une image couleur sombre. Autrement dit, l'image de la figure 6 est l'image obtenue en combinant l'image de la figure 4 avec l'image de la figure 5. Dans cet exemple, la combinaison est une moyenne pixel par pixel des images des figures 4 et 5. Cette combinaison peut toutefois être autre qu'une moyenne. Ce peut être, par exemple, une moyenne pondérée ou bien du type décrit dans le brevet déposé le 29 mars 2002 en France sous le numéro de dépôt 02-04170.

Cette image combinée de la figure 6 montre à la fois les éléments qui étaient peu brillants sur la figure 4 et les éléments colorés de la figure 5. On voit ainsi le piéton 3 et les lignes blanches 8 et 9. On voit également les feux avant jaunes 1 a et 1 b du véhicule venant en sens inverse, le reflet sur le sol 2 de ces feux avant et les panneaux de signalisation rouges 4 et 5 avec l'inscription « Stop » sur le panneau 4.

Dans un autre exemple de scène de route, un feu tricolore ou des feux stop arrières ou des feux d'éclairage avant ou des feux clignotants pourraient apparaitre sur l'image avec une couleur correspondant à la couleur réelle desdits feux. Il est donc très facile pour le conducteur de savoir de quels types de feux il s'agit, de pouvoir alors interpréter l'image et réagir en fonction de cette interprétation.

L'invention combine donc un capteur noir et blanc très sensible avec un capteur couleur moins sensible.

## Revendications

1. Système de vision nocturne d'une scène de route pour véhicule automobile comportant au moins un dispositif de projection (11) émettant une lumière infrarouge vers la scène de route et un premier capteur (12) pour capturer une première image de la scène de route, tel que
- ledit premier capteur est un capteur couleur détectant des rayonnements essentiellement dans le visible,
ledit système comporte également :
- un second capteur (13) monochrome pour capturer une seconde image infrarouge de la scène de route,
la première image étant une image en couleurs réelles dans le visible et la seconde image étant une image monochrome dans l'infra-rouge,
- des moyens de traitement d'images pour combiner la première image avec la seconde image,
et **caractérisé en ce que**, pour un même objet à détecter prédéterminé, le premier capteur (12) a une sensibilité au moins 10 fois inférieure à celle du second capteur (13) de telle sorte que le système de vision nocturne soit adapté pour que l'image capturée par le capteur couleur ne comporte aucun halo de lumière dû à un éblouissement du premier capteur.

2. Système selon la revendication précédente, **caractérisé en ce que** la sensibilité aux infrarouges du second capteur (13) est de l'ordre de 10 à 100 fois supérieure à celle dudit premier capteur (12).

3. Système selon la revendication 1 ou 2, **caractérisé en ce que** lesdits moyens de traitement d'images réalisent une combinaison de l'image monochrome infra-rouge et de l'image dans le visible par un moyennage pixel par pixel des images.

4. Système selon l'une quelconque des revendications précédentes, **caractérisé en ce qu'**il est monté dans un véhicule automobile (10).

5. Procédé de vision nocturne d'une scène de route à l'aide du système vision nocturne de la revendication 1, dans lequel un faisceau lumineux infrarouge est émis en direction de la scène de route, **caractérisé en ce qu'**il comporte les opérations suivantes :
- capture d'une première image en couleurs réelles dans le visible de la scène de route,
- capture d'une seconde image infrarouge monochrome de la scène de route, la capture de l'image dans le visible se faisant avec une sensibilité au moins 10 fois inférieure à celle de la capture de l'image dans l'infra-rouge,
- combinaison des première et seconde images de la scène de route, et
- obtention d'une combinaison des images infrarouge et visible de la scène de route.

6. Procédé selon la revendication 5, **caractérisé en ce que** la combinaison des première et seconde images comporte un moyennage pixel par pixel desdites première et seconde images.

7. Procédé selon la revendication 5 ou 6, **caractérisé en ce que** la capture des première et seconde image se fait de façon synchrone ou quasi-synchrone.

## Claims

1. Night vision system for a road scene for a motor vehicle, comprising at least one projection device (11) emitting an infrared light towards the road scene and a first sensor (12) for capturing a first image of the road scene, such that
- the said first sensor is a colour sensor detecting radiation essentially in the visible range,
the said system also comprises:
- a second monochrome sensor (13) for capturing a second infrared image of the road scene,
the first image being an image in real colours in the visible range and a second image being a monochrome image in the infrared range,
- image processing means for combining the first image with the second image,
and **characterised in that**, for one and the same predetermined object to be detected, the first sensor (12) has a sensitivity of less than one tenth of that of the second sensor (13) so that the night vision system is adapted so that the image captured by the colour sensor comprises no halo of light due to a dazzling of the first sensor.

2. System according to the preceding claim, **characterised in that** the sensitivity to infrared of the second sensor (13) is around 10 to 100 times greater than that of the said first sensor (12).

3. System according to claim 1 or 2, **characterised in that** the said image processing means effect a combination of the infrared monochrome image and the image in the visible range by a pixel-by-pixel averaging of the images.

4. System according to any one of the preceding claims, **characterised in that** it is mounted in a motor vehicle (10).

5. Road scene night vision method using the night vision system of claim 1, in which an infrared light beam is emitted in the direction of the road scene, **characterised in that** it comprises the following operations:
- capturing a first image of the road scene in real colours in the visible range,
- capturing a second monochrome infrared image of the road scene, the image in the visible range being captured with a sensitivity of less than one tenth of that of the capture of the image in the infrared range,
- combining the first and second images of the road scene, and
- obtaining a combination of the infrared and visible images of the road scene.

6. Method according to claim 5, **characterised in that** the combination of the first and second images comprises a pixel-by-pixel averaging of the said first and said second images.

7. Method according to claim 5 or 6, **characterised in that** the first and second images are captured synchronously or almost synchronously.

## Patentansprüche

1. System zum Erkennen einer Straßenszene bei Nacht für Kraftfahrzeuge, mit wenigstens einer Projektionsvorrichtung (11), die ein Infrarotlicht in Richtung der Straßenszene aussendet, und einem ersten Sensor (12) zum Erfassen eines ersten Bildes der Straßenszene, wobei
- der erste Sensor ein Farbsensor ist, der im Wesentlichen Strahlung im sichtbaren Bereich erfasst,
wobei das System ferner umfasst:
- einen zweiten Monochromsensor (13) zum Erfassen eines zweiten Infrarotbildes der Straßenszene,
wobei das erste Bild ein Bild mit realen Farben im sichtbaren Bereich ist, und das zweite Bild ein monochromes Bild im Infrarotbereich ist,
- Bildverarbeitungsmittel zum Kombinieren des ersten Bildes mit dem zweiten Bild, und **dadurch gekennzeichnet, dass** für ein und dasselbe vorbestimmte, zu erfassende Objekt die Empfindlichkeit des ersten Sensors (12) wenigstens zehnmal geringer ist als die des zweiten Sensors (13), so dass das Nachtsichtsystem so ausgebildet ist, dass das von dem Farbsensor erfasste Bild keinen durch eine Blendung des ersten Sensors verursachten Lichthof aufweist.

2. System nach dem vorhergehenden Anspruch,
**dadurch gekennzeichnet, dass** die Infrarot-Empfindlichkeit des zweiten Sensors (13) etwa zehn- bis hundertmal höher ist als die des ersten Sensors (12).

3. System nach Anspruch 1 oder 2,
**dadurch gekennzeichnet, dass** die Bildverarbeitungsmittel eine Kombination des monochromen Infrarot-Bildes mit dem im sichtbaren Bereich aufgezeichneten Bild durch Mittelung der Bilder Pixel für Pixel vornehmen.

4. System nach einem der vorhergehenden Ansprüche,
**dadurch gekennzeichnet, dass** es in einem Fahrzeug (10) angebracht ist.

5. Verfahren zum Erkennen einer Straßenszene bei Nacht mit Hilfe des Nachtsichtsystems des Anspruchs 1, bei dem ein Infrarot-Lichtbündel in Richtung der Straßenszene ausgesandt wird,
**dadurch gekennzeichnet, dass** es die folgenden Schritte umfasst:
- Erfassung eines ersten Bildes der Straßenszene mit realen Farben im sichtbaren Bereich,
- Erfassung eines zweiten monochromen Infrarot-Bildes der Straßenszene, wobei die Erfassung des Bildes im sichtbaren Bereich mit einer Empfindlichkeit erfolgt, die wenigstens zehnmal geringer ist als die der Erfassung des Infrarot-Bildes,
- Kombination des ersten und des zweiten Bildes der Straßenszene, und
- Erzielung einer Kombination des Infrarot-Bildes und des im sichtbaren Bereich aufgezeichneten Bildes der Straßenszene.

6. Verfahren nach Anspruch 5,
**dadurch gekennzeichnet, dass** die Kombination des ersten und des zweiten Bildes eine Mittelung des ersten und des zweiten Bildes Pixel für Pixel umfasst.

7. Verfahren nach Anspruch 5 oder 6,
**dadurch gekennzeichnet, dass** die Erfassung des ersten und des zweiten Bildes synchron oder nahezu synchron erfolgt.
